# EUROPEAN PATENT APPLICATION

(11) **EP 4 574 235 A1**
(43) Date of publication of application: **25.06.2025**
(21) Application number: 23220138.4
(22) Date of filing: 22.12.2023
(51) Int. Cl.: B01D 53/04, B01D 53/26

(54) **PROCESS FOR THE CAPTURE OF CO2 FROM A GASEOUS COMPOSITION**

(71) Applicant: Carbyon Holding B.V., 5656 AE Eindhoven (NL)
(72) Inventor: Göktolga, Mustafa Ugur, Eindhoven (NL); van Hoof, Arno Johannes Franciscus, Eindhoven (NL)
(74) Representative: Hoekman, Joram Salvador

(57) **Abstract**

The invention relates to a process for the capture of CO₂ from a gaseous composition, such as air, comprising:
- a sorption step, in which a solid sorbent, capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent wherein the desorption step is carried out at such a heating rate that most of the CO₂ is released before most of the H₂O is released.

## Description

The invention relates to a process for the capture of CO₂ from a gaseous composition, such as air, comprising:
- a sorption step, in which a solid sorbent, capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent.

CO₂ or carbon dioxide is a chemical compound which is released by the combustion of fossil fuels. There is a desire to reduce the footprint of human mankind to the amount of CO₂ released into the atmosphere, because it is generally accepted that the increased concentration of CO₂ in ambient air causes climate change. CO₂ may be captured from exhaust streams of industrial processes. However, due to the already increased CO₂ concentration in the air since the start of the Industrial Revolution, there is also an interest to remove CO₂ from ambient air. Processes which are aimed to capture CO₂ directly from air are also referred to as Direct Air Capture (DAC).

Capture processes typically involve a plurality of alternating sorption and desorption steps, which may be carried out in a cyclical manner. In the adsorption step, a sorbent capable of binding CO₂, which is contained in a reactor, is contacted with a gaseous composition (which is air, in the case of DAC). This causes the CO₂ to be sorbed by the sorbent and the CO₂ concentration in the gaseous composition to be reduced in the outlet relative to the inlet. During the subsequent desorption step, the reactor is closed, and the conditions within the reactor are changed in order to release the sorbed CO₂, which may be used for various purposes (e.g. conversion or storage). Various types of sorbents are currently investigated, one of which being the solid sorbents described in WO 2022/013456 A1. The sorbents described herein comprise a porous support with a sorbent coated onto the pore walls of the porous support.

Despite the CO₂ content in air having increased to what it used to be, the global average concentration of CO₂ in the atmosphere is currently still approximately 424 ppm. In view of this concentration, quite a substantial flowthrough the sorbent is needed to capture a significant amount of CO₂ from air, which makes it challenging to operate a DAC process efficiently. In particular, ambient air contains other components in addition to CO₂, which may negatively impact the performance of the sorbent in the sense that these have a further negative influence on the energy balance. In the case of solid sorbents, one such an ingredient is water (H₂O), thereby making most of the currently known processes suffer from a suboptimal process efficiency.

WO 2022/109746 A1 discloses a CO₂ direct air capture apparatus, comprising: a. an enclosure defining an interior volume; b. a CO₂ adsorbent bed contained within the interior volume of the enclosure; c. a vacuum source coupled to the enclosure; d. a source of input air coupled to the enclosure; e. a heater capable of heating the interior volume of the enclosure; wherein the interior volume of the enclosure can be selectively isolated from one or more components of the apparatus to enable selective control of the contents, pressure, and temperature of the interior volume of the enclosure, and wherein the input air has a temperature equal to less than 0°C, or a humidity equal to or less than 5 g of H₂O per kg of air, prior to entering the enclosure. The apparatus preferably comprises a drying means located between the source of input air and the enclosure, whereby the drying means is configured to remove water from the input air prior to the input air entering the interior volume of the enclosure. Consequently, this apparatus requires the provision of additional machine parts to reduce the effects of H₂O on the adsorbent bed, thereby making the device complex.

WO 2022/192408 A2 discloses a structured material assembly for removing CO₂ from a gas, comprises a substrate, a sorbent for adsorbing CO₂ from the gas, and a desorption material integrated into the structured material assembly, which is responsive to inputted energy to generate heat to desorb CO₂ from the sorbent. The CO₂-containing gas may comprise ambient air.

It is an object of the invention to alleviate or even obviate the above-mentioned disadvantages.

This object is achieved with a process for the capture of CO₂ from a gaseous composition, such as air, comprising:
- a sorption step, in which a solid sorbent, capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent
wherein the desorption step is carried out at such a heating rate that most of the CO₂ is released before most of the H₂O is released.

In the present invention, it has surprisingly been found that when carrying out a desorption step at a suitably high heating rate, sorbents release CO₂ faster than H₂O. In other words, CO₂ desorption and H₂O desorption are decoupled. As a consequence, it is possible to carry out the process such that most of the CO₂ is released before most of the H₂O, thereby increasing process efficiency. The suitably high heating rate depends on the particular sorbent, and may be determined by carrying out the sorption at a plurality of heating rates, and by measuring the release of both CO₂ and H₂O from the sorbent in the desorption step. At the suitably high heating rate, the release profile of CO₂ and H₂O over time both show a maximum, wherein the maximum of H₂O release is delayed relative to the maximum of CO₂ release by a time difference. Said time difference may for instance be at least 10 seconds, preferably at least 30 seconds, more preferably at least 50 seconds, even more preferably at least 100 seconds, most preferably at least 200 seconds, for instance at least 300 seconds, at least 400 seconds or even at least 500 seconds.

The sorption step and the desorption step are not necessarily in the order mentioned, which may mean that the process may commence with a desorption step. However, most typically, the process will start with a sorption step.

Any desorption step in the process may immediately follow a sorption step. Any sorption step in the process may immediately follow a desorption step. However, for either of these steps, it may be possible to have an optional other step (not being a desorption or sorption step) between these steps (i.e. between sorption and desorption steps and/or between desorption and sorption steps), such as any single step or combination of steps selected from optional steps like an evacuation step, a waiting step and a flushing step.

The sorbent is typically a chemical sorbent, i.e. a sorbent capable of bonding CO₂ by chemically reacting with it.

The process is typically a Direct Air Capture (DAC) process, which implies that the gaseous composition, which is air, comprises CO₂ and H₂O. Nevertheless, it is also possible to use the process for other gaseous compositions containing CO₂ and H₂O.

The process according to the invention is typically part of a temperature swing and/or pressure swing process (e.g. a vacuum pressure swing process), during which kind of processes the CO₂ is removed from the sorbent and collected in a suitable manner. In the desorption step, the heating is typically to a temperature in the range of 50- 180 °C, preferably 80 - 150 °C, most preferably 110 - 130 °C and the sorbent is capable to thereby release sorbed CO2. The CO₂ collected in the process according to the invention may be post-processed in any way known by a person skilled in the art. Non-limiting examples of post-processing are for instance conversion into fuels, supply of said CO₂ to industries such as vertical farming, or geologic sequestration.

The sorbent is preferably accommodated in a housing or reactor. The reactor typically comprises an air displacement device or suction device for sucking air into the reactor. Such suction devices are known in the art and include for example a ventilator or fan. This suction device is arranged such that air is able to be sucked into the reactor. The sorbent may be transported between a sorption location and a desorption location in carrying out the method, but most typically the sorbent is at the same location during the sorption step and the desorption step (i.e. the reactor is static).

In a preferred embodiment, in the desorption step, the sorbent is heated at an average rate of at least 1 °C/second, preferably at least 5 °C/second, more preferably at least 10 °C/second, most preferably at least 15 °C/second. Such heating rates are in particular preferred to achieve the effect of decoupling the CO₂ release maximum and the H₂O release maximum and are higher than the heating rates disclosed in WO 2022/192508 A2. The heating rate is typically substantially equal throughout the desorption step, but should the heating rate differ over the course of the desorption step, the preferred heating rate according to this embodiment is preferably an average heating rate.

In another preferred embodiment, a sorption step subsequent to the desorption step is started at a moment after which most of the CO₂ is released but before most of the H₂O is released. In other words, in this embodiment, the desorption step is stopped after the maximum of CO₂ release from the sorbent, and before the maximum of H₂O release from the sorbent. In the sorption step subsequent to this desorption step, the sorbent sorbs less H₂O compared to a fresh sorbent not containing H₂O sorbed thereon. The remaining H₂O reduces the driving force for any more sorption of H₂O. Hence, the sorption of H₂O in a next sorption is less compared to sorption on a sorbent not containing water and/or a fresh sorbent (i.e. a dry sorbent which had not been used for sorption from gaseous compositions with CO₂ and H₂O before), thereby increasing process efficiency as a consequence of a reduced need to heat the H₂O during the capture process.

In a particularly preferred embodiment, at the moment (i.e. the moment at which a sorption step subsequent to the desorption step is started), at least one of a) at least 70% CO₂, preferably at least 90% CO₂ and b) at most 40%, preferably at most 20% H₂O has desorbed. Such an embodiment is particularly preferred, since it further enhances process efficiency.

While the invention is not limited to a particular solid sorbent, it is observed that the invention works particularly well with a sorbent which comprises a) a carrier with an internal pore structure and b) an active ingredient capable of sorbing CO₂, provided within the internal pore structure.

It is observed that a solid sorbent having such a structure provides a sorbent with a relatively large surface area for the active ingredient to be provided therein, thereby maximizing the capacity, and hence increasing process efficiency. Particularly preferred carriers are carriers with a surface area of at least 500 m²/gram, more preferably at least 1.000 m²/gram, most preferably at least 2.000 m²/gram.

The discrimination between a carrier and an active ingredient does not necessarily mean that the active ingredient is the only of these two components having a capability of capturing CO₂ and/or H₂O, but only means that the active ingredient has a higher affinity towards and/or capacity for capturing any of these two components from the gaseous composition.

Optionally, the active ingredient may leave a central part of a pore (or the center of the pore) of the internal pore structure free from active ingredient (and other solids and/or liquids), thereby increasing the rate at which the gas has to access to the active ingredient. Alternatively and/or additionally, the sorbents may be sorbents in which a major part (e.g. at least 50% by volume, more preferably at least 70% by volume, even more preferably at least 80% by volume, most preferably at least 90% by volume) of the originally available pore volume (i.e. the pore volume of the naked carrier - without active ingredient) is maintained free from active ingredient after providing the active ingredient onto the carrier. Either of these two may be confirmed by physisorption of Ar or N₂, in combination with BET analysis. Alternatively and/or additionally, suitable sorbents may be sorbents capable of sorbing at least 0.05 grams of CO₂ per kg or sorbent per second, preferably at least 0.10 grams of CO₂ per kg or sorbent per second, more preferably at least 0.15 grams of CO₂ per kg of sorbent per second, most preferably at least 0.20 grams of CO₂ per kg of sorbent per second. Alternatively and/or additionally, suitable sorbents may be sorbents capable of saturating relatively quickly, e.g. from 0% to 75% saturation by weight within 600 seconds. Saturation may in particular mean to achieve an equilibrium capacity of the sorbent. Such an equilibrium capacity may vary as conditions (e.g. temperature, relative humidity, pressure) change.

In a particular embodiment, the carrier comprises activated carbon. While such an activated carbon is in principle not limited to a specific form, it is preferably in the form of a granulate or a fibre. The granulate preferably has an average main dimension (e.g. diameter) of between 100-1.000 µm, preferably between 125-500 µm, more preferably between 150-400 µm, most preferably between 200-300 µm. The fibre may be part of a textile, a mesh or a felt.

While the sorbent is in principle not restricted to a particular type, and may for instance be one of a zeolite, an amine, a metal organic framework (MOF), in a preferred embodiment, the sorbent comprises one or more of an alkali or alkaline earth carbonate and preferably comprises and more preferably essentially consists of potassium carbonate. When the sorbent comprises a carrier, such as an activated carbon-based carrier with an active ingredient in the internal pore structure, the active ingredient comprises and preferably essentially consists of this alkali or alkaline earth carbonate (e.g. potassium carbonate).

A sorbent essentially consisting of potassium carbonate may mean that at least 90%, preferably at least 95%, more preferably at least 99%, even more preferably at least 99.9%, most preferably at least 99.99% of the sorbent, all on a weight-per-weight-basis is potassium carbonate. If the sorbent comprises a) a carrier with an internal pore structure and b) an active ingredient capable of sorbing CO₂ provided within the internal pore structure, it is the active ingredient which preferably essentially consists of potassium carbonate, which means that at least 90%, preferably at least 95%, more preferably at least 99%, even more preferably at least 99.9%, most preferably at least 99.99% of the active ingredient, all on a weight-per-weight-basis is potassium carbonate.

A method for impregnating an active carbon-based carrier with potassium carbonate is disclosed by Meis et al., Ind. Eng. Chem. Res., 2013, 52, 12812-12818. Potassium carbonate is expected to react with CO₂ in an equilibrium reaction with water producing potassium bicarbonate:

K₂CO₃ + CO₂ + H₂O ↔ 2 KHCOs

In addition, alternative pathways, such as a pathway through a sesquihydrate, as discussed by Duan et al. in J. Phys. Chem. C. 2012, 116, 14461-14470 are also conceived, and the invention is not restricted to a particular pathway.

Preferably, in the sorption step, the gaseous composition is directed from an inlet towards an outlet, through the sorbent. The housing or reactor which is preferably provided for accommodating the sorbent, typically contains such an inlet and an outlet, ensuring that as a consequence of the flow of the gas through the housing (or reactor), the gaseous composition is contacted with the sorbent, causing the sorbent to sorb CO₂ from the gaseous composition, thereby relatively reducing a CO₂ concentration in the gaseous composition as it exits the outlet relative to a CO₂ concentration of the gaseous composition at the inlet.

Typically, the process is a cyclic process, comprising a plurality of cycles, wherein each cycle comprises one sorption step and one desorption step. This allows a sorbent to be used many times to capture CO₂ from air, increasing process efficiency. Preferably, the number of cycles is at least 2, at least 5, at least 10, at least 20, at least 50, at least 100. In general, the steps are carried out in the sequence [sorption-desorption-]ₙ with n any integer above 2, preferably repeating continuously. As mentioned, optional steps not being a sorption step or a desorption step may be inserted between some (or all) of the steps.

In case of a cyclic process, the process is thus typically a process comprising a plurality of cycles, wherein each cycle comprises a sorption step and a desorption step, wherein in the sorption step, a solid sorbent capable of sorbing CO₂ and H₂O (most typically comprising a carrier with an internal pore structure and an active ingredient within the internal pore structure) is contacted with the gaseous composition, thereby sorbing CO₂ from the gaseous composition to the sorbent, and wherein in the desorption step, the sorbent is actively heated to a temperature higher than that in the sorption step for releasing at least a part of the sorbed CO₂, wherein the desorption step of one, more than one or even all cycles is carried out at such a heating rate that most of the CO₂ is released before most of the H₂O is released.

Typically, the sorption step is essentially an adsorption step. In other words, the sorbent (or, where applicable, more specifically: the active ingredient provided on the internal pore structure thereof) is such that a part of CO₂ is able to adsorb to the sorbent (or active ingredient) at or near the surface of the sorbent (or active ingredient), minimizing the amount of sorbent (or: active ingredient) which the CO₂ is required to diffuse through the sorbent (or active ingredient) before it is able to react with CO₂. A part in this respect particularly means that at least 10% by weight of the active ingredient is configured to be in direct contact with the gaseous composition during the process according to the invention, preferably at least 30%, more preferably at least 45%, even more preferably at least 60%, most preferably at least 75%.

In an embodiment, a sorption step subsequent to the desorption step substantially coincides with a cooldown phase of the desorption step. It has been found that it is advantageous in terms of process efficiency if a sorption step subsequent to the desorption step substantially coincides with a cooldown phase of the desorption step. Consequently, residual heat transferred into the sorbent during the desorption step (typically by active heating) is used during the subsequent sorption step to keep the sorbent temperature warm. A or each desorption step has a cooldown phase after the desorption step. During the desorption step, the sorbent is actively heated. During the subsequent cooldown phase, the sorbent is cooling down from the temperature at which desorption took place during the desorption step towards an ambient temperature, preferably by passive cooling. The ambient temperature may be the temperature at or near the inlet of a reactor in which the sorbent is accommodated, or may be an exterior temperature in close proximity of the reactor. It should be noted that the ambient temperature is not a fixed value and that in particular, it may depend on e.g. weather and geographical location.

In particular, the requirement of coincidence (or concurrence, or overlap) of the sorption step subsequent to the desorption step with the cooldown phase may in particular mean that the sorption step uses a part of the cooldown phase, preferably a part at or near the start of the cooldown phase at which the temperature difference between the sorbent and the ambient temperature is relatively large compared to an end part of the cooldown phase. The sorption step and the cooldown phase may for instance have an overlap between 70-99 %, preferably between 75-95 %, more preferably between 80-90 %, all calculated in terms of the time of said sorption step relative to the cooldown phase. Typically, the part of the cooldown phase coinciding with the sorption step may have a duration of between 10 and 600 seconds, preferably between 50 and 400 seconds, more preferably between 100 and 300 seconds, most preferably between 150 and 200 seconds.

The invention is further elucidated with reference to the following examples.

### Sorbent synthesis:

A K₂CO₃/Activated carbon (AC) sorbent was synthesized by applying incipient wetness impregnation following procedures similar to Meis et al., Ind. Eng. Chem. Res., 2013, 52, 12812-12818.

### Granulates

Activated carbon granulates were dried in an oven at 110 °C overnight prior to impregnation. Next, granulates impregnated with an aqueous K₂CO₃ solution. Afterwards, the sample was dried in air in an oven at 110 °C overnight, resulting in the K₂CO₃/AC sorbent. K₂CO₃/AC-felt sorbent were synthesized in a similar way.

### Breakthrough measurements

CO₂ and H₂O adsorption and desorption performance (capacity and kinetics) were measured in an in-house developed breakthrough analyser setup. In a typical experiment, between 100-600 mg of sample (sorbent) was loaded in a packed bed reactor (ID = 8 mm) with a quartz wool plug placed on top and bottom of the bed to fix the location. The temperature was measured by a thermo-couple directly placed in the packed-bed reactor. Before starting the experiment the sample was heated to fully degas the sample. The gasses fed to the reactor were controlled by Bronkhorst Mass Flow Controllers in combination with fully automated Labview software allowing control of gas flow, relative humidity and sorbent temperature. The outlet gas composition was measured using an on-line Quadrupole Mass Spectrometry (QMS, Hiden Analytical). The analysed gasses comprised N₂, CO₂, O₂ and H₂O. An external calibration method was used to determine the Relative Sensitivity Factor of each compound, allowing accurate quantification of the gas concentration.

During the adsorption the sorbent was exposed to synthetic air (400 ppm CO₂, 20% O₂, balance N₂, flowrate ranging between 0.3 and 3.0 l/min) with a relative humidity of 35% at 25 °C for an adsorption time ranging between 10 and 1200 seconds. Subsequently, the lines were shortly flushed for 10 - 120 seconds to empty the lines from any residual H₂O and CO₂. Then sorbent was heated under an inert atmosphere to 80 - 120 °C for 50 - 300 seconds. These adsorption and desorption cycles were repeated multiple times.

In order to quantify the amount of adsorbed and desorbed CO₂ and H₂O the adsorption and desorption data was compared with a blank experiment, were no sample capable of sorbing CO₂ and H₂O was present in the reactor.

### Example 1: Fast desorption for activated carbon felt

For the breakthrough experiments with a low heating rate, 0.2 g of K₂CO₃/Felt sample was placed in a Packed Bed Reactor (PBR). In the case of the high heating rate experiment, a piece of felt was clamped between 2 electrodes in an enclosed reactor vessel allowing heat the felt by Joule heating in combination with adsorption and desorption experiments. In both cases the experiment was started for multiple adsorption and desorption cycles. The experiments heated in the PBR are referred to as low heating rate. The experiments heated by Joule heating are referred to as high heating rate.

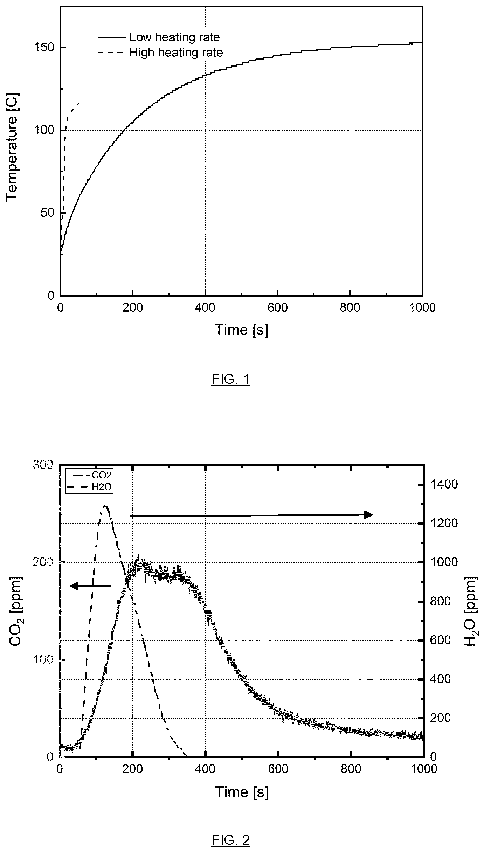

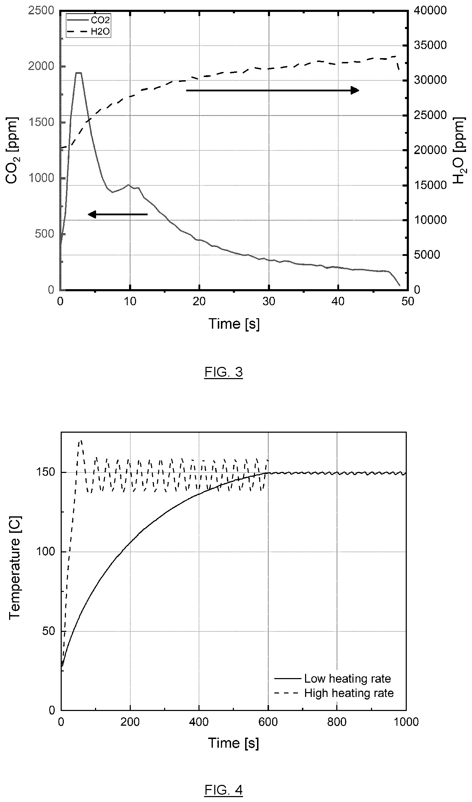

The heating rates achieved are shown in Figure 1. In the PBR the initial heating rate is approximately 0.4 °C/second levelling off to 0.1 °C/second. Heating rates achieved by Joule heating were much higher. In the initial 15 seconds a heating rate of 5 °C/second was reached. The corresponding desorption profiles for low heating rate and high heating rate are shown in Figure 2 and Figure 3 respectively. For the low heating rate experiment, it can be clearly seen the peak corresponding to water desorption (dashed line) clearly appears before the desorption peak of CO₂ (continuous line). In this case, stopping the desorption before the sample is completely empty would not result in a decreased H₂O:CO₂ ratio. In Figure 3 however, the peak order is reversed. The CO₂ peak clearly arrives before the majority of the H2O is being desorbed. In this case, stopping desorption before the whole sorbent is degassed would result in a significantly lower H₂O:CO₂ ratio. It can also be seen that, at the end of this desorption cycle (after 50 seconds) that water is still desorbing while the CO₂ signal is close to 0. This indicates that there still is water present in the sorbent at the end of this desorption cycle, while most of the CO₂ has been desorbed.

In two separate experiments, a piece of felt was clamped between two electrodes in an enclosed reactor vessel allowing heat the felt by Joule heating in combination with adsorption and desorption experiments. In both cases the experiment was started for multiple adsorption and desorption cycles and in both cases a high heating rate (5 °C/second) was applied. In one of these two experiments, the desorption time was extended until full desorption (desorption time = 1000 seconds). These results are shown in Table 1. An average H₂O:CO₂ ratio of 5.6 is achieved. In the other experiment, the desorption time was limited to prevent most of the H₂O to be desorbed (desorption time = 50 seconds). The corresponding results are shown in Table 2. The average H₂O:CO₂ ratio here is 2.55 significantly lower than the H₂O:CO₂ ratio obtained by full desorption. This effect is observable for multiple cycles, proving that this is not a temporary effect.

The above described experiments clearly show that the desorbed H₂O:CO₂ ratios can be reduced by applying a high heating rate on a sorbent loaded with CO₂ and H₂O in combination with a shortened desorption time.

**Table 1. CO₂ and H₂O capacities and obtained H₂O:CO₂ ratios for the experiment where full desorption was performed.**

| Cycle | CO2 capacity [g/kg] | H2O capacity [g/kg] | H2O:CO2 ratio [mol:mol] |
|---|---|---|---|
| 1 | 26.9 | 73 | 6.7 |
| 2 | 26.6 | 48 | 4.4 |
| 3 | 26.5 | 61 | 5.6 |
| Average | 26.7 | 61 | 5.6 |

**Table 2. CO2 and H2O capacities and obtained H2O.CO2 ratios for the experiment where a short desorption was performed.**

| Cycle | CO2 capacity [g/kg] | H2O capacity [g/kg] | H2O:CO2 ratio [mol:mol] |
|---|---|---|---|
| 1 | 16.7 | 25.1 | 3.7 |
| 2 | 17.8 | 16.2 | 2.2 |
| 3 | 14.6 | 23.8 | 4.0 |
| 4 | 14.8 | 24.3 | 4.0 |
| 5 | 16.6 | 20.6 | 3.0 |
| 6 | 17.9 | 11.7 | 1.6 |
| 7 | 20.8 | 32.9 | 3.9 |
| 8 | 15.2 | 6.5 | 1.0 |
| 9 | 19.0 | 27.1 | 3.5 |
| 10 | 20.2 | 9.5 | 1.2 |
| 11 | 17.2 | 17.3 | 2.5 |
| 12 | 20.8 | 21.9 | 2.6 |
| 13 | 18.4 | 5.0 | 0.7 |
| 14 | 17.8 | 19.8 | 2.7 |
| 15 | 19.1 | 8.6 | 1.1 |
| 16 | 17.5 | 26.2 | 3.7 |
| 17 | 20.9 | 21.3 | 2.5 |
| Average | 17.9 | 18.7 | 2.6 |

### Example 2: Fast desorption for granulates

For the breakthrough experiments, 0.2 g of K₂CO₃/granulate sample was placed in a Packed Bed Reactor (PBR). In the case of the low heating rate experiment, the reactor was heated externally using a heating wire. In the case of the high heating rate experiment, the reactor was heated externally using a combination of a heating wire and a Peltier element. In both cases the experiment was started for multiple adsorption and desorption cycles. The experiments heated with the heating wire are referred to as low heating rate. The experiments heated by Joule heating are referred to as high heating rate.

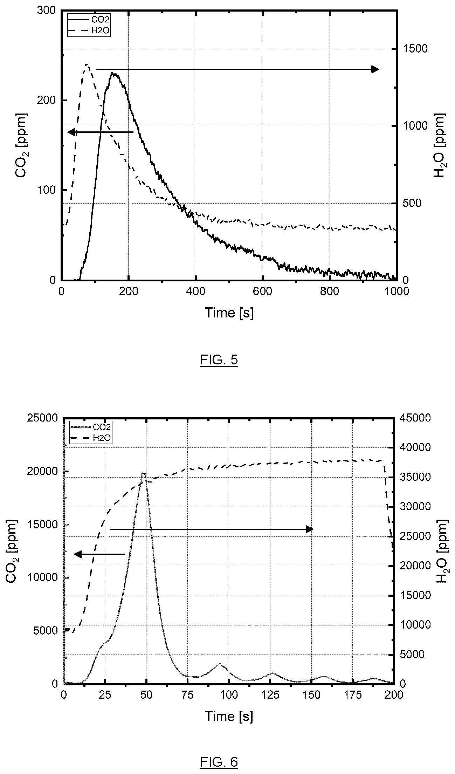

The heating rates achieved are shown in Figure 4. In the PBR the initial heating rate is approximately 0.4 °C/second levelling off to 0.1 °C/second. Heating rates achieved by the combination of a heating wire and a Peltier element were much higher. In the initial 45 seconds a heating rate of 2.5 °C/second was reached. The corresponding desorption profiles for low heating rate and high heating rate are shown in Figure 5 and Figure 6 respectively. For the low heating rate experiment, it can be clearly seen that the peak corresponding to water desorption (dashed line) clearly arises before the desorption peak of CO₂ (continuous line). In this case, stopping the desorption before the sample is completely empty would not result in a decreased H₂O:CO₂ ratio. In Figure 6 however, the peak order is reversed. The CO₂ peak clearly arrives before the majority of the H₂O is being desorbed. In this case, stopping desorption before the whole sorbent is degassed would result in a significantly lower H₂O:CO₂ ratio. It can also be seen that, once the CO₂ signal is close to 0, that water is still desorbing. This indicates that there still is water present in the sorbent while most of the CO₂ has been desorbed.

The above described experiments clearly show that the desorbed H₂O:CO₂ ratios can be reduced by applying a high heating rate on a sorbent loaded with CO₂ and H₂O in combination with a shortened desorption time when applied on activated carbon granulates.

These and other features of the invention are further elucidated with reference to the accompanying drawings.
Figure 1 shows a graph of the sorbent temperature as function of time for a setup with a low heating rate and for a setup with a high heating rate (felt).
Figure 2 shows a graph of CO2 and H2O profiles for a desorption experiment where a low heating rate was applied (felt).
Figure 3 shows a graph of CO₂ and H₂O profiles for a desorption experiment where a high heating rate was applied (felt).
Figure 4 shows a graph of the sorbent temperature as function of time for a setup with a low heating rate and for a setup with a high heating rate (granulate).
Figure 5 shows a graph of CO₂ and H₂O profiles for a desorption experiment where a low heating rate was applied (granulate).
Figure 6 shows a graph of CO₂ and H₂O profiles for a desorption experiment were a high heating rate was applied (granulate).
Figure 7 shows a process according to the invention.

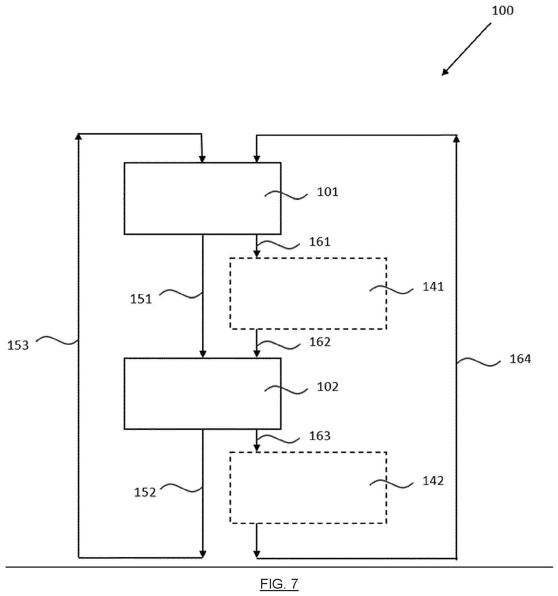

In figure 7, a cyclic process 100 is shown for sorbing CO₂ from a gaseous composition. The process 100 comprises an adsorption step 101 and a subsequent desorption step 102. The desorption step 102 may directly follow adsorption step 101 (via pathway 151), but may, alternatively, comprise an optional intermediate step 141 (via pathway 161, 162). Since it is a cyclic process, a further sorption step 101 follows desorption step 102 (either directly, via pathway 153), or via an optional intermediate step 142 (via pathway 163, 164). It should be observed that the process may at some point be aborted, e.g. for maintenance. The process 100 will typically start with an adsorption step 101.

## Claims

1. Process for the capture of CO₂ from a gaseous composition, such as air, comprising:
- a sorption step, in which a solid sorbent, capable of sorbing CO₂ and H₂O is contacted with the gaseous composition, thereby sorbing CO₂ from the gaseous composition to the sorbent, and
- a desorption step, in which the sorbent is heated to a temperature higher than that in the sorption step for releasing at least a part of the sorbed CO₂ from the sorbent
**characterized in that**
the desorption step is carried out at such a heating rate that most of the CO₂ is released before most of the H₂O is released.

2. Process according to claim 1, wherein in the desorption step, the sorbent is heated at an average rate of at least 1 °C/second, preferably at least 5 °C/second, more preferably at least 10 °C/second, most preferably at least 15 °C/second.

3. Process according to claim 1 or 2, wherein a sorption step subsequent to the desorption step is started at a moment after which most of the CO₂ is released but before most of the H₂O is released.

4. Process according to claim 3, wherein at the moment, at least one of a) at least 70% CO₂, preferably at least 90% CO₂ and b) at most 40%, preferably at most 20% H₂O has desorbed.

5. Process according to any one of the preceding claims, wherein the sorbent comprises a) a carrier with an internal pore structure and b) an active ingredient capable of sorbing CO₂, provided within the internal pore structure.

6. Process according to any one of the preceding claims, wherein the carrier comprises activated carbon, preferably in the form of a granulate or a fibre.

7. Process according to any one of the preceding claims, wherein the active ingredient comprises an alkali or alkaline earth carbonate and preferably comprises and more preferably essentially consists of potassium carbonate.

8. Process according to any one of the preceding claims, wherein in the sorption step, the gaseous composition is directed from an inlet towards an outlet, throughout the sorbent.

9. Process according to any one of the preceding claims, wherein the process is a cyclic process, comprising a plurality of cycles, wherein each cycle comprises one sorption step and one desorption step.

10. Process according to any one of the preceding claims, wherein the sorption step is essentially an adsorption step.

11. Process according to any one of the preceding claims, wherein a sorption step subsequent to the desorption step substantially coincides with a cooldown phase of the desorption step.
